# EUROPEAN PATENT APPLICATION

(11) **EP 1 881 116 A1**
(43) Date of publication of application: **23.01.2008**
(21) Application number: 06253837.6
(22) Date of filing: 21.07.2006
(51) Int. Cl.: E03B 7/07, E03C 1/02, F16K 1/02

(54) **Stop cock with additional water inlet and method of operation**

(71) Applicant: YORKSHIRE WATER SERVICES LTD., Bradford, West Yorkshire BD6 2LZ (GB)
(72) Inventor: Proctor, John William, Bradford, West Yorkshire BD6 2LZ (GB); Johnson, Ian, Bradford, West Yorkshire BD6 2LZ (GB); Drayton, Dennis, Bradford, West Yorkshire BD6 2LZ (GB)
(74) Representative: Neill, Alastair William

(57) **Abstract**

Water supply apparatus is provided comprising an elongate hollow body member 19, lower end 14 of the body member being adapted for connection to a stop cock, the stop cock having a first flow path 11 to a water main and a second flow path 13 to premises to be supplied with water, the body member having at least one inlet port 23, and having sealing means 20 to seal the first flow path 11 of the stop cock, and it then being possible to supply water to the premises through the inlet port 29, through the hollow body member 19, and into the second flow path 13 of the stop cock.

The invention enables the period of interruption of a water supply to a particular premises to be substantially reduced, and in some circumstances reduced to no more than a few minutes, when it is necessary for a water main to undergo maintenance or repair.

## Description

The invention relates to water supply apparatus and particularly to water supply apparatus for use in the supply of water to individual premises, from a common water main.

At the present time, if a water main has to undergo maintenance or repair, the water supply to the premises in the vicinity of the relevant part of the water main has to be interrupted during the period of maintenance or repair, often lasting several hours.

The invention provides water supply apparatus which enables a period of interruption to be substantially reduced, and in some circumstances reduced to no more than a few minutes.

The invention provides water supply apparatus comprising an elongate hollow body member, the lower end of the body member being adapted for connection to a stop cock, the stop cock having a first flow path to a water main and a second flow path to premises to be supplied with water, the body member having at least one inlet port and having sealing means to seal the first flow path of the stop cock, and it then being possible to supply water to the premises through the inlet port, through the hollow body member and into the second flow path of the stop cock.

The sealing means may comprise a valve member mounted on a shaft which extends through the hollow body member to an external handle.

The body member may have an exit port, as well as an inlet port, so that water can also be supplied to the body member of one or more similar water supply apparatus.

The invention includes a method of supplying water to premises, the premises being connected to a water main by a stop cock, the method comprising connecting to the stop cock water supply apparatus as defined above, and operating the water supply apparatus firstly to isolate the premises from the water main and secondly to supply water to the premises through the water supply apparatus.

By way of example, a specific embodiment of the invention will now be described, with reference to the accompanying drawings in which:
Figure 1 is a diagrammatic cross-section through a conventional water stop cock connected between a water main and premises;
Figure 2 is a diagram illustrating supply routes from a water main to premises;
Figure 3 is a cross-section through the lower part of apparatus according to this embodiment of the invention, in a first condition;
Figure 4 is a view similar to Figure 3, but showing the apparatus in a second condition; and
Figure 5 is a diagrammatic cross-section through the entire apparatus according to this embodiment of the invention.

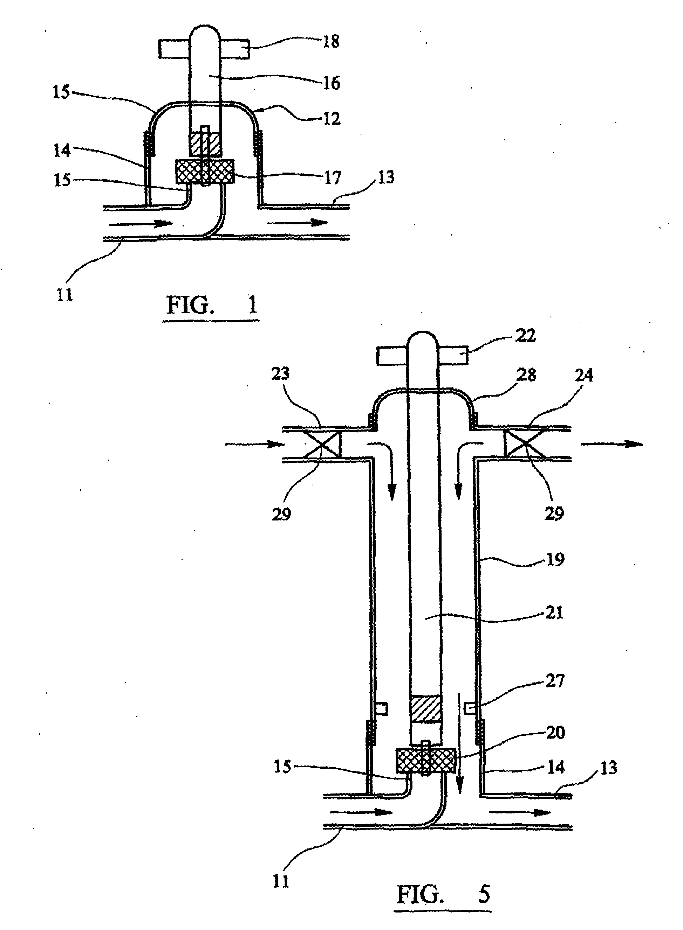

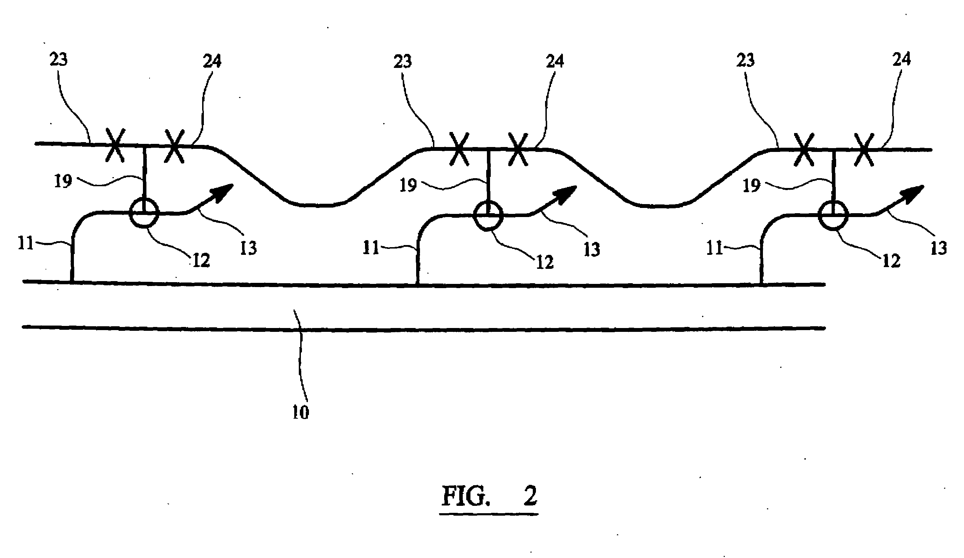

Referring firstly to Figures 1 and 2, a common water main 10 will generally be used to provide a water supply to a substantial number of premises, through a plurality of connecting pipes 11. These lead off from spaced apart locations along the water main 10, each connecting pipe 11 leading to a stop cock 12. From each stop cock an individual supply pipe 13 leads into the associated premises.

Each stop cock 12 comprises a valve body 14 within which there is an upwardly facing valve seat 15. The valve body 14 has, screw-threaded thereto a cap 15 in which is mounted a valve spindle 16. The valve spindle 16 has a valve member 17 at its lower end and a cross bar 18 at its upper end. The valve member 17 can be moved towards or away from the valve seat 15 by rotating the spindle 16 using the cross-bar 18.

The stop cock 12 enables the occupiers of individual premises to turn off the supply from the main 10, for example if they wish to carry out repairs or maintenance within the premises. In the condition shown in Figure 1, the stop cock is closed, with the valve member 17 screwed down onto the valve seat 15. When it is desired to supply water to the premises, the valve spindle 16 is rotated to lift the valve member 17 off the valve seat 15, and water from pipe 11 can then flow into the valve body 12, and then flow out of the valve body 12 to the pipe 13, which is connected to the valve body 14 as shown in Figure 1.

At present, if a section of water main has to be repaired or maintained, there is no alternative but to interrupt the supply to a substantial number of premises, for a substantial period of time, often several hours.

The apparatus according to this embodiment enables this interruption time to be substantially reduced, possibly to a matter of minutes. The apparatus comprises a hollow, elongate cylindrical body 19 which can be screwed onto any of the valve bodies 14, after removal of the cap 15, together with the valve spindle 16 and valve member 17. Within the cylinder 19, there is a valve member 20 similar to the valve member 17, and positioned at the lower end of a long shaft 21 which passes out through the top of the cylinder 19, to a cross bar 22.

The cylinder 19 has, adjacent the upper end, at least one, and preferably two, side pipes 23 and 24.

When the cylinder 19 has been connected to one of the valve bodies 14, as shown in Figure 5, the valve member 20 can be moved into and out of engagement with the valve seat 15, in a similar manner to movement of the valve member 17 shown in Figure 1.

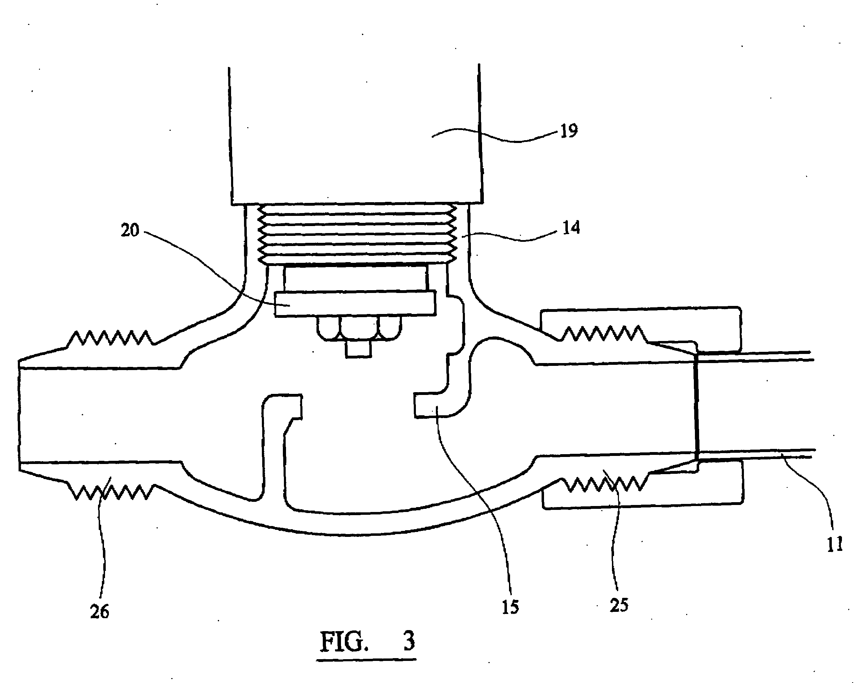

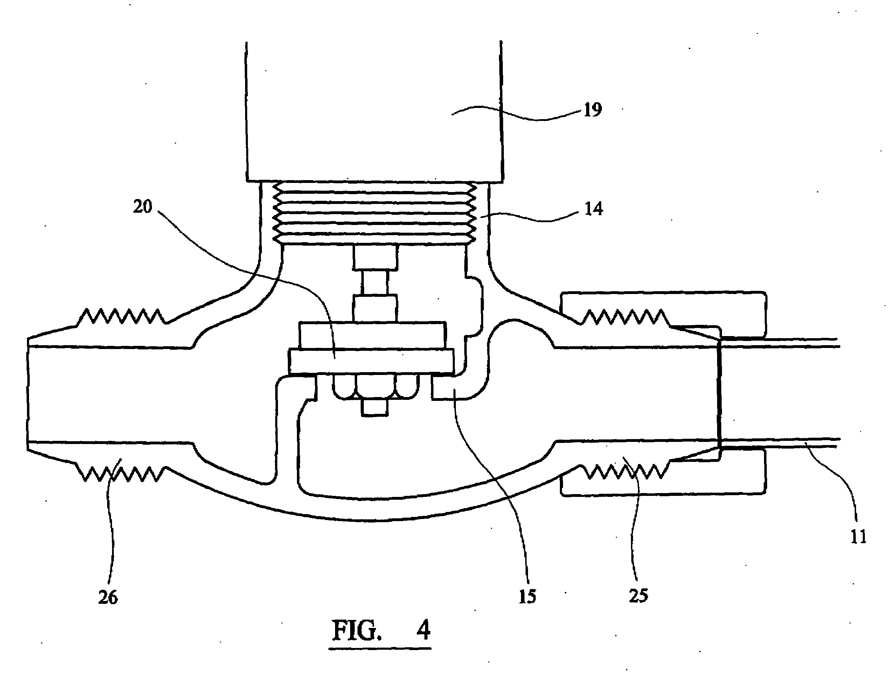

Figure 3 shows the valve member 20 lifted off the valve seat 15 and Figure 4 shows the valve member 20 in engagement with the valve seat 15.

Figures 3 and 5 also show how the valve body 14 has a screw threaded compression fitting 25 for connecting the valve body to one of the pipes 11, and also has a screw threaded nozzle 26 for connection to one of the pipes 13. in some installations a soldered joint may be used instead of the compression fitting 25.

If a section of water main has to be taken out of service for any reason, the upper part of the stop cocks of the relevant premises are removed and each is replaced by an apparatus as shown in Figure 5. The shaft 21 is rotated to move the valve member 20 into engagement with the valve seat 15, briefly cutting off the premises from the associated connection pipe 11, and hence the water main 10. An alternative source of water supply is quickly connected to one of the side pipes 23, 24, and water supply to the premises is then restored as water entering the side pipe can flow down the cylinder 19, passed the sealed valve seat 15, and into the premises through the associated pipe 13.

When two side pipes 23 and 24 are provided, the alternative supply can be connected to several premises in a daisy chain manner. The alternative supply can be directly connected to a first side pipe 23. Some water thus flows down the associated cylinder 19 to the associated premises, but some also flows out of the other side pipe 24. This side pipe 24 is connected to the side pipe 23 of the next apparatus, and so on, as shown in Figure 2.

The lower part of the shaft 21 may be provided with a supporting collar 27, and the upper part of the cylinder 19 may comprise a removable screw-threaded cap 28. Each side pipe 23, 24 is preferably provided with its own valve 29 so that the side pipes can be closed off if necessary. For example, where several of the cylinders 19 are connected together in a daisy chain fashion as shown in Figure 2, the final side pipe 24 should be closed off to avoid any unnecessary loss of water.

The alternative supply may be provided in any convenient manner. For example, the supply could be piped from a hydrant connected to a part of the water main that is not going to be taken out of service. Alternatively, the supply could come from a pumped bowser system.

In addition to being used to reduce the length of interruption of water supply to premises, the apparatus forming the subject of this embodiment can also be used to carry out tests on water in a convenient manner. At present, stop cocks, which are generally located below ground, have to have the ground around the stop cock dug away before test equipment, for example a flow meter can be attached to the supply point. This is unnecessary with the apparatus according to the invention. The apparatus can be connected as shown in Figure 5, and the necessary flow meter or test apparatus can be connected to one of the side pipes 23, 24.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Water supply apparatus comprising an elongate hollow body member, the lower end of the body member being adapted for connection to a stop cock, the stop cock having a first flow path to a water main and a second flow path to premises to be supplied with water, the body member having at least one inlet port and having sealing means to seal the first flow path of the stop cock, and it then being possible to supply water to the premises through the inlet port, through the hollow body member and into the second flow path of the stop cock.

2. Water supply apparatus as claimed in Claim 1, in which the sealing means comprises a valve member mounted on a shaft which extends through the hollow body member to an external handle.

3. Water supply apparatus as claimed in Claim 1 or Claim 2, in which the body member has an exit port, as well as an inlet port, so that water can also be supplied to the body member of one or more similar water supply apparatus.

4. Water supply apparatus as claimed in Claim 1, in which the body member has an elongate shaft passing therethrough, the upper end of the shaft carrying an operating handle and the lower end of the shaft carrying a valve member for engagement with the inlet port of the shaft work, once the water supply apparatus has been connected to the stop cock.

5. Water supply apparatus as claimed in Claim 4, in which the lower end of the elongate body member is provided with a screw thread to enable the body member to be connected to the stop cock.

6. Water supply apparatus as claimed in Claim 4 or Claim 6, in which the upper end of the elongate body member is provided with at least two side pipes.

7. Water supply apparatus as claimed in Claim 6, in which each side pipe is provided with its own closure valve.

8. Water supply apparatus constructed and arranged substantially as herein described, with reference to the accompanying drawings.

9. A method of supplying water to premises, the premises being connected to a water main by a stop cock, the method comprising connecting to the stop cock water supply apparatus as claimed in any one of the preceding claims, and operating the water supply apparatus firstly to isolate the premises from the water main and secondly to supply water to the premises through the water supply apparatus.

10. A method of supplying water to premises, substantially as herein described with reference to the accompanying drawings.
